# EUROPÄISCHE PATENTSCHRIFT

(11) **EP 3 260 336 B1**
(45) Veröffentlichungstag und Bekanntmachung des Hinweises auf die Patenterteilung: **25.08.2021**
(21) Anmeldenummer: 17174928.6
(22) Anmeldetag: 08.06.2017
(51) Int. Cl.: B60T 10/02, F16D 57/04

(54) **DAUERBREMSVORRICHTUNG FÜR EIN FAHRZEUG**
VEHICLE RETARDER
RALENTISSEUR POUR UN VÉHICULE AUTOMOBILE

(30) Priorität: 23.06.2016 DE 102016007729
(43) Veröffentlichungstag der Anmeldung: 27.12.2017
(73) Patentinhaber: MAN Truck & Bus SE, 80995 München (DE)
(72) Erfinder: Heim, Volker, 81241 München (DE); Redeker, Christian, 80339 München (DE)
(74) Vertreter: v. Bezold & Partner Patentanwälte - PartG mbB

(56) Entgegenhaltungen:
- EP-B1- 0 585 989
- WO-A1-03/064228
- WO-A1-2005/007473
- WO-A1-2013/135754
- DE-A1- 10 035 822
- DE-A1- 19 857 535

## Beschreibung

Die Erfindung betrifft eine Dauerbremsvorrichtung für ein Fahrzeug.

Aus dem Stand der Technik sind Dauerbremsen für Kraftfahrzeuge, insbesondere für Nutzfahrzeuge bekannt. Eine Dauerbremse ist eine Einrichtung, die länger andauerndes und auch verschleißfreies Bremsen ermöglicht, ohne in ihrer Bremsleistung nachzulassen (ausgenommen thermische und/oder kapazitive Gründe). Die verschiedenen Dauerbremsen werden in primäre und sekundäre Dauerbremsen unterteilt. Eine primäre Dauerbremse ist üblicherweise motorseitig und im Kraftfluss vor dem Getriebe angeordnet. Primäre Dauerbremsen wirken üblicherweise über die Kurbelwelle des Motors; ihre Performance ist daher drehzahlabhängig. Beispiele für primäre Dauerbremsen sind Motorbremsen, z. B. als Auspuffklappenbremsen, als ventilgesteuerte Dauerbremsen und/oder als Turbosysteme oder sogenannte Primärretarder. Sekundäre Dauerbremsen sind im Kraftfluss hinter dem Getriebe angeordnet, beispielsweise an der Gelenkwelle, und umfassen beispielsweise hydraulisch wirkende Retarder oder Wirbelstrombremsen. Sekundäre Dauerbremsen wirken geschwindigkeitsabhängig. Zu den sekundären Dauerbremsen zählen Sekundärretarder, insbesondere in Form einer hydrodynamischen Strömungsbremse, oder elektromagnetische Wirbelstrombremsen.

Der Stand der Technik bietet Lösungen zur Dauerbremsansteuerung per Fahrerwunsch auf Basis von Momentanforderungen, die abstufbar oder stufenlos an die jeweilige(n) Dauerbrems-Komponente(n) weitergegeben werden. Hierbei finden fahrzeugspezifische Eigenschaften wie beispielsweise Fahrzeugmasse, Achslast, Zuggesamtgewicht etc. meist keine Berücksichtigung. Dies hat den Nachteil, dass gleiche Momentanforderungen je nach Fahrzeugkonfiguration unterschiedliche Verzögerungswerte bedingen.

Ferner offenbart die EP 0 585 989 B1 ein Fahrzeuggetriebesystem, umfassend ein Getriebe, einen Retarder sowie ein Steuermittel, das ausgebildet ist, den Retarder zu aktivieren und die resultierende Fahrzeugverzögerung zu überwachen. Die Regelung des Retarders erfolgt dabei in Abhängigkeit der Getriebeöltemperatur, der Fahrzeuggeschwindigkeit und der Fahrzeugverzögerung, wodurch eine definierte vom Fahrer angeforderte Verzögerungsrate eingestellt wird.

Auch in der WO 03/064228 A1 wird die Möglichkeit offenbart, dass ein Fahrer eines Fahrzeugs für die Dauerbremsansteuerung eine bestimmte zu erreichende Verzögerung auswählt. Auf Basis der Messwerte verschiedener Fahrzeugsensoren, darunter Fahrzeuggewicht, Fahrbahnsteigung und Motormoment, errechnet eine Kontrolleinrichtung das aktuelle zum Erreichen einer konstanten Verzögerung nötige Bremsmoment. Nachteilig an diesem Verfahren ist allerdings die Vielzahl an Sensorwerten, die für das beschriebene Verfahren benötigt werden, was eine erhebliche Fehleranfälligkeit birgt.

Es ist somit eine Aufgabe der Erfindung, eine Dauerbremsvorrichtung bereitzustellen, mit dem Nachteile herkömmlicher Techniken vermieden werden können.

Diese Aufgabe wird durch eine Dauerbremsvorrichtung mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird eine Dauerbremsvorrichtung für ein Fahrzeug, insbesondere für ein Nutzfahrzeug, bereitgestellt. Die Dauerbremsvorrichtung umfasst in an sich bekannter Weise mindestens eine Dauerbremse, beispielsweise in Form eines Primärretarders und/oder eines Sekundärretarders.

Die Dauerbremsvorrichtung umfasst ferner eine Eingabeeinrichtung, mittels derer eine Fahrzeug-Verzögerungsanforderung auswählbar ist, die eine zu erreichende Verzögerung ausgehend von, d. h. relativ zu, einer bestehenden Fahrzeugbewegung und insbesondere relativ zu einer bestehenden Verzögerung des Fahrzeugs kodiert bzw. angibt. Lediglich beispielhaft kann die Eingabeeinrichtung als Bedienelement, z. B. Bedienhebel, ausgeführt sein, das zur Auswahl einer bestimmten Fahrzeug-Verzögerungsanforderung in verschiedene Stellungen und/oder Richtungen bewegbar ist.

Eine auswählbare Fahrzeug-Verzögerungsanforderung, die eine zu erreichende Verzögerung ausgehend von einer bestehenden Fahrzeugbewegung des Fahrzeugs kodiert, bedeutet, dass die Fahrzeug-Verzögerungsanforderung als Offset zur bestehenden Fahrzeugverzögerung, (z. B. aufgrund eines Fahrwiderstands, Bergauffahrt etc.) zu verstehen ist, so dass jede über das Bedienelement ausgewählte Fahrzeug-Verzögerungsanforderung eine Veränderung der aktuellen Ist-Verzögerung um den Wert der ausgewählten Fahrzeug-Verzögerungsanforderung anfordert und zu einer aktiven Verzögerung des Fahrzeugs führt. Eine Ausnahme ist jedoch der Fall, dass gemäß einer bevorzugten Ausführungsform mittels der Eingabeeinrichtung auch eine Fahrzeug-Verzögerungsanforderung auswählbar ist, die einer Fahrt mit konstanter Geschwindigkeit entspricht, was nachfolgend noch erläutert wird.

Die Dauerbremsvorrichtung umfasst ferner eine Dauerbremsensteuereinrichtung, die so ausgebildet ist, dass sie in Abhängigkeit von der ausgewählten Fahrzeug-Verzögerungsanforderung eine Dauerbremsen-Bremsanforderung, die ein von der Dauerbremse aufzubringendes Dauerbremsen-Bremsmoment kodiert bzw. angibt, bestimmt, die beim Einstellen des Dauerbremsen-Bremsmoments durch die mindestens eine Dauerbremse für gleiche Fahrzeug-Verzögerungsanforderungen und insbesondere unabhängig von der aktuellen Fahrzeuggesamtmasse stets die gleichen Verzögerungen des Fahrzeugs bewirkt. Mit anderen Worten bedingen gleiche Fahrzeug-Verzögerungsanforderungen stets gleiche Ist-Fahrzeugverzögerungen. Dadurch wird eine Unabhängigkeit der Bremswirkung von der Fahrzeug- bzw. der Zuggesamtmasse erreicht, so dass unabhängig vom Beladungszustand des Fahrzeugs/der Zugkombination bei stets gleicher Fahrzeug-Verzögerungsanforderung stets die gleiche Fahrzeugverzögerung erzielt wird. Dies gilt selbstverständlich nur im Rahmen der Leistungsfähigkeit der mindestens einen Dauerbremse resp. der zulässigen, reibwertabhängigen Kraftübertragung auf die Straße.

Die Dauerbremsensteuereinrichtung ist ferner ausgebildet, die bestimmte Dauerbremsen-Bremsanforderung an die Dauerbremse(n) zum Einstellen des Dauerbremsen-Bremsmoments zu übermitteln.

Ferner ist die Dauerbremsensteuereinrichtung ausgebildet, eine Regelung des Dauerbremsbetriebs nach dem Prinzip der Verzögerungsregelung durchzuführen. Hierzu ist die Dauerbremsensteuereinrichtung ausgebildet, eine Regelung des Dauerbremsbetriebs durchzuführen, bei der eine Abweichung einer fortlaufend bestimmten Ist-Fahrzeugverzögerung als Regelgröße mit einer der ausgewählten Fahrzeug-Verzögerungsanforderung entsprechenden Soll-Fahrzeugverzögerung als Führungsgröße verglichen wird und bei Regelabweichungen die Dauerbremsen-Bremsanforderung als Stellgröße angepasst wird.

Dabei erfolgt keine Anpassung der aktuellen Dauerbremsen-Bremsanforderung, falls keine Abweichung zwischen einer bestimmten Ist-Fahrzeugverzögerung und der Soll-Fahrzeugverzögerung, die sich aus der ausgewählten Fahrzeug-Verzögerungsanforderung ergibt, vorliegt. Ferner wird eine Dauerbremsen-Bremsanforderung erhöht, falls die Ist-Fahrzeugverzögerung kleiner als die Soll-Fahrzeugverzögerung ist und verringert, falls die Ist-Fahrzeugverzögerung größer als die Soll-Fahrzeugverzögerung ist. Die Ist-Fahrzeugverzögerung kann beispielsweise aus dem zeitlichen Verlauf der Fahrzeuggeschwindigkeit und/oder der Radgeschwindigkeit ermittelt werden.

Mit dem Ansatz, Dauerbremsen nach dem Prinzip der Verzögerungsregelung agieren zu lassen, wird eine technisch besonders einfach zu realisierende Unabhängigkeit der Bremswirkung von der aktuellen Fahrzeugkonfiguration, insbesondere von der aktuellen Fahrzeug- bzw. der Zuggesamtmasse erreicht, da unterschiedliche Beladungszustände des Fahrzeugs, Reibwertverhältnisse, Fahrbahnsteigungen etc. nicht notwendigerweise als Korrekturfaktoren sensorisch oder als hinterlegte Parameter erfasst und rechnerisch aufwändig bei der Bestimmung des Dauerbremsen-Bremsanforderung berücksichtigt werden müssen. Stattdessen werden diese Effekte durch den Regelkreis automatisch ausregelt, so dass unabhängig vom Beladungszustand des Fahrzeugs im Rahmen zulässiger Reibwertverhältnisse bei stets gleicher Dauerbremsmomentanforderung stets die gleiche Fahrzeugverzögerung erzielt wird. Gemäß der Erfindung, die Dauerbremse(n) nach dem Prinzip der Verzögerungsregelung agieren zu lassen, kann somit auf die Verwendung von Sensordaten, die eine aktuelle Fahrzeuggesamtmasse oder andere die aktuelle Fahrzeugkonfiguration betreffende Daten angeben, verzichtet werden. Es soll verstanden werden, dass sich die Regelziele nur bei ausreichend installiertem und zur Verfügung stehendem Dauerbremsmoment vollumfänglich realisieren lassen.

Ungeachtet dessen ist es jedoch vorteilhaft, die Regelung mit einem möglichst guten Startwert für die von der Dauerbremsensteuereinrichtung bestimmten Dauerbremsen-Bremsanforderung zu beginnen, um größere Nachjustierungen im Rahmen der Regelung zu vermeiden.

Hierzu sieht eine erste vorteilhafte Variante dieser Ausgestaltungsform vor, dass für die auswählbaren Werte der Fahrzeug-Verzögerungsanforderungen jeweils ein vorbestimmter Wert der Dauerbremsen-Bremsanforderung hinterlegt ist, z. B. in Form eines Parameters, der von der Dauerbremsensteuereinrichtung als Startwert für die Regelung des Dauerbremsbetriebs verwendet wird. Diese Startwerte sind beispielsweise Werte für die Dauerbremsen-Bremsanforderung für eine typische Fahrzeugkonfiguration die jeweils den über die Eingabeeinrichtung auswählbaren Fahrzeugverzögerungsanforderungen entsprechen. Derartige Startwerte können beispielsweise vorab experimentell für einen bestimmten Fahrzeugtyp bestimmt und in der Dauerbremsvorrichtung hinterlegt werden.

Hierzu sieht eine zweite vorteilhafte Variante dieser Ausgestaltungsform vor, dass ein in Abhängigkeit von der erfassten Fahrzeug-Verzögerungsanforderung bestimmter Wert der Dauerbremsen-Bremsanforderung ferner in Abhängigkeit von einer aktuellen Fahrzeuggesamtmasse, einem aktuellen topographischen Fahrbahnverlauf (Steigung/Gefälle), und/oder einer aktuellen Fahrbahnreibung angepasst wird und als Startwert für die Regelung des Dauerbremsbetriebs verwendet wird. Werte für die aktuelle Fahrzeuggesamtmasse, Fahrbahnsteigung/-gefälle und/oder eine Fahrbahnreibung können beispielsweise sensorisch mittels entsprechend zweckmäßig ausgeführten Sensoreinrichtungen erfasst werden.

Die beiden vorgenannten Varianten bieten somit jeweils den Vorteil, dass größere Nachjustierungen zu Beginn der Verzögerungsregelung vermieden werden können.

Die Eingabeeinrichtung kann so ausgeführt sein, dass die Fahrzeug-Verzögerungsanforderung in Stufen auswählbar ist. Alternativ kann die Eingabeeinrichtung ausgeführt sein, dass die Fahrzeug-Verzögerungsanforderung stufenlos auswählbar ist. Gemäß einer besonders vorteilhaften Variante kann die Fahrzeug-Verzögerungsanforderung mittels der Eingabeeinrichtung sowohl in Stufen als auch stufenlos auswählbar sein. Die Eingabeeinrichtung kann ferner so ausgeführt sein, dass die Anforderung einer maximalen Sollverzögerung ebenfalls per einmaligem Stufensprung durch die Eingabevorrichtung ermöglicht werden kann.

Gemäß einer bevorzugten Ausführungsform können mittels der Eingabeeinrichtung eine Erhöhung und eine Verringerung der Fahrzeugverzögerung ausgehend von der bestehenden Fahrzeugbewegung als zu erreichende Fahrzeug-Verzögerungsanforderung auswählbar sein, z. B. jeweils als Wert mit der Einheit m/s^2 oder als Prozentangabe der Erdbeschleunigung. Vorzugsweise ist die Eingabeeinrichtung mit einer Skala oder einer zugeordneten Beschriftung versehen, die den Wert der auswählbaren Verzögerungsanforderung anzeigt, z. B. in der Einheit m/s"2 oder als Prozentangabe der Erdbeschleunigung. Die Eingabeeinrichtung kann jedoch auch so ausgebildet sein, dass nur die Information über die Wirkrichtung der Verzögerungsanforderung angezeigt wird, z. B. durch die Angaben "+"/"-" oder durch Pfeilangaben "erhöhen/vermindern".

Eine Verringerung der bestehenden Fahrzeugverzögerung stellt somit eine positive Beschleunigung ausgehend von der aktuellen Fahrzeugbewegung dar. Eine Verringerung der bestehenden Fahrzeugverzögerung kann über die Dauerbremse selbstverständlich nur in denjenigen Situationen realisiert werden, wenn die Dauerbremse zu diesem Zeitpunkt bereits ein Dauerbremsmoment erzeugt, was entsprechend reduziert werden könnte. Mit einer Eingabe einer Verringerung kann z. B. eine zuvor als Fahrzeug-Verzögerungsanforderung eingegebene Erhöhung der bestehenden Fahrzeugverzögerung rückgängig gemacht werden.

Gemäß einer weiteren bevorzugten Ausführungsform ist mittels der Eingabeeinrichtung ferner eine Fahrzeug-Verzögerungsanforderung auswählbar, die einer Fahrt mit konstanter Geschwindigkeit entspricht. Mit anderen Worten kann eine Fahrzeug-Verzögerungsanforderung ausgewählt werden, die eine zu erreichende absolute Verzögerung bzw. Fahrzeugbeschleunigung von 0 m/s^2 kodiert.

Bei Auswahl einer Fahrzeug-Verzögerungsanforderung, die einer Fahrt mit konstanter Geschwindigkeit entspricht, ist die Dauerbremsensteuereinrichtung ausgebildet, die Dauerbremsen-Bremsanforderung derart zu bestimmen, dass sich das Fahrzeug zumindest in einer Gefällestrecke unabhängig vom Gefällegrad mit konstanter Geschwindigkeit bewegt. Hierbei wird von der Dauerbremsensteuereinrichtung kein Dauerbremsmoment angefordert, sofern gilt: Die Ist-Verzögerung des Fahrzeugs ist größer als die Sollverzögerung. In diesem Falle kann ein Betriebsmodus mit konstanter Geschwindigkeit ("v=konstant") auch nicht realisiert werden, da Dauerbremsen nicht beschleunigend wirken können. Bei (beschleunigender) Bergabfahrt jedoch werden im Anwendungsfall "v=konstant" die Dauerbremsmomente derart manipuliert, dass das Fahrzeug einer beliebigen (konstanten oder veränderlichen) Topographie folgen kann und so bei einer konstanten Wunschgeschwindigkeit gehalten wird. In der Senke werden die Bremsmomente der Dauerbremse dann wieder gen 0 Nm geregelt.

Im Rahmen der Erfindung besteht ferner die Möglichkeit, dass die Eingaberichtung eine auswählbare Nullstellung aufweist, mittels derer eine zuvor über die Eingabeeinrichtung ausgewählte Veränderung der Fahrzeug-Verzögerung rückgängig gemacht oder ausgeschaltet werden kann. Auf diese Weise können zuvor ausgewählte Fahrzeug-Verzögerungsanforderungen wieder auf einfache Weise deaktiviert werden.

Im Rahmen der Erfindung besteht ferner die Möglichkeit, dass die Bedieneinrichtung eine erste Bedienebene aufweist, mittels derer unterschiedliche Fahrzeug-Verzögerungsanforderungen größer oder kleiner null in Stufen und/oder stufenlos auswählbar sind, und dann ferner eine zweite Bedienebene aufweist, über die Fahrzeug-Verzögerungsanforderung, die einer zu erreichenden Verzögerung des Fahrzeugs von 0 m/s^2 entspricht, auswählbar ist. Auf diese Weise können mit einer Eingabeeinrichtung die unterschiedlichen Betriebsmodi der Dauerbremsensteuerung (Einsteuerung eines Offsets zur bestehenden Fahrzeugverzögerung und Fahrt mit konstanter Geschwindigkeit) entsprechend ausgewählt werden.

Lediglich beispielhaft kann die Bedieneinrichtung einen Kippschalter oder Tipphebel aufweisen, der aus einer Mittelstellung in Richtung einer ersten Achse (x-Achse) in eine erste Stellung und eine zweite Stellung verschwenkt werden kann und sich selbsttätig wieder in die Mittelstellung zurückstellt. Hierbei kodiert eine kurze Betätigung des Kippschalters oder Tipphebels in die erste Stellung eine gestufte Erhöhung der zu erreichenden Verzögerung des Fahrzeugs, eine kurze Betätigung des Kippschalters oder Tipphebels in die zweite Stellung eine gestufte Verringerung der zu erreichenden Verzögerung des Fahrzeugs. Ferner kodiert ein Halten des Kippschalters oder Tipphebels in der ersten Stellung eine stufenlose Erhöhung der zu erreichenden Verzögerung des Fahrzeugs und ein Halten des Kippschalters oder Tipphebels in der zweiten Stellung eine stufenlose Verringerung der zu erreichenden Verzögerung des Fahrzeugs. Diese Betätigungen des Kippschalters oder Tipphebels können eine erste Bedienebene der Bedieneinrichtung ausbilden. Ferner kann der Kippschalter oder Tipphebel auch in Richtung einer zweiten Achse (y-Achse) betätigbar sein, wodurch eine Fahrzeug-Verzögerungsanforderung auswählbar ist, die einer Fahrt mit konstanter Geschwindigkeit entspricht. Die Betätigung des Kippschalters oder Tipphebels in Richtung der zweiten Achse kann dann die vorstehend genannte zweite Bedienebene der Bedieneinrichtung ausbilden.

Es wird betont, dass die vorstehende Ausführungsvariante lediglich beispielhaft ist und dass sich die beiden Bedienebenen nicht zwingend in einem Winkel abweichend von 0° befinden müssen, sondern die Bedieneinrichtung kann auch so ausgeführt sein, dass beide Anforderungen, d. h. die Verzögerungsanforderung und die Anforderung einer Fahrt mit konstanter Geschwindigkeit, auch in der gleichen Ebene bzw. in der gleichen Betätigungsrichtung ausführbar sind.

Gemäß einer weiteren Ausführungsvariante kann die Bedieneinrichtung ein Bedienelement aufweisen, das rastend in eine erste Richtung und eine zweite Richtung verschoben werden kann und das insbesondere nicht zwangsweise wieder in eine Nullstellung bzw. Ausgangsstellung zurückfällt, wobei eine Verschiebung des Bedienelements in die erste Stellung eine gestufte Erhöhung der zu erreichenden Verzögerung des Fahrzeugs kodiert, und wobei eine Verschiebung des Bedienelements in die zweite Stellung eine gestufte Verringerung der zu erreichenden Verzögerung des Fahrzeugs kodiert.

Die Erfindung betrifft ferner ein Nutzfahrzeug, aufweisend eine Dauerbremsvorrichtung, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockdiagramm einer Dauerbremsvorrichtung gemäß einer Ausführungsform der Erfindung;
- Figur 2: ein erstes Zeitdiagramm zur Illustration einer Funktionsweise der Dauerbremsvorrichtung nach dem Prinzip der Verzögerungsregelung gemäß einer Ausführungsform der Erfindung; und
- Figur 3: ein zweites Zeitdiagramm zur Illustration einer Funktionsweise der Dauerbremsvorrichtung nach dem Prinzip der Verzögerungsregelung gemäß einer weiteren Ausführungsform der Erfindung.

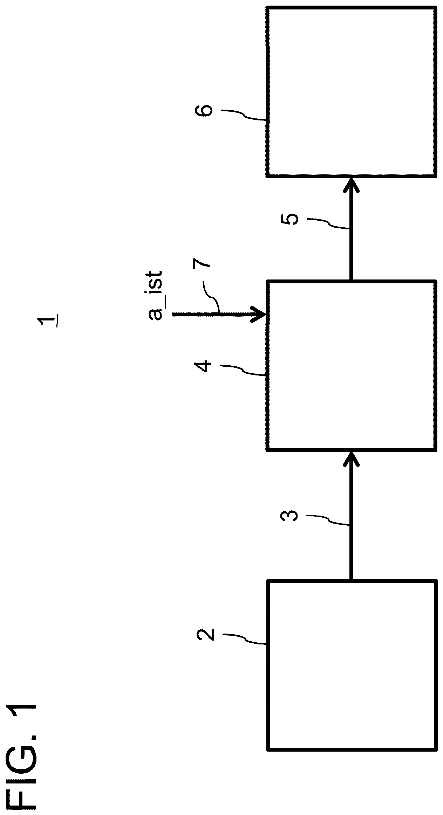

Figur 1 zeigt ein schematisches Blockdiagramm einer Dauerbremsvorrichtung 1 eines Nutzfahrzeugs. Das Nutzfahrzeug kann ein Zugfahrzeug mit oder ohne Anhänger sein. Die Dauerbremsvorrichtung 1 umfasst dabei in an sich bekannter Weise mindestens eine an sich bekannte Dauerbremse 6, die beispielsweise als primäre Dauerbremse und/oder als eine sekundäre Dauerbremse ausgeführt sein kann.

Die primäre Dauerbremse kann beispielsweise in an sich bekannter Weise eine Motorstaubremse aufweisen, die auch zusätzlich noch eine Dekompressionsbremse aufweisen kann. Die sekundäre Dauerbremse kann einen Sekundärretarder aufweisen.

Die Dauerbremsvorrichtung 1 umfasst ferner eine Dauerbremsensteuereinrichtung 4, die den Betrieb und das Bremsmoment der Dauerbremse 6 regelt.

Die Dauerbremsvorrichtung 1 umfasst ferner eine Eingabeeinrichtung 2, die im Fahrerhaus vom Fahrer manuell betätigbar ist und mittels derer eine Fahrzeug-Verzögerungsanforderung 3 auswählbar ist, die eine zu erreichende Verzögerung ausgehend von einer bestehenden Verzögerung des Fahrzeugs kodiert.

Die Bedieneinrichtung kann hierzu beispielsweise einen Kippschalter (nicht dargestellt) aufweisen, der aus einer Mittelstellung in eine erste Kippstellung und eine entgegengesetzte zweite Kippstellung verschwenkt werden kann und sich selbsttätig wieder in die Mittelstellung zurückstellt. Vorstehend wurde bereits erwähnt, dass auch andere Ausführungsvarianten der Bedieneinrichtung im Rahmen der Erfindung möglich sind, beispielsweise solche, die rastend in eine Stellung bringbar sind und sich nicht selbständig in die Nullstellung zurückstellen.

Die Bedieneinrichtung in Form eines Kippschalters ist hierbei so ausgeführt, dass eine kurze Betätigung des Schalters in die erste Kippstellung eine Fahrzeug-Verzögerungsanforderung 3 als Ausgabesignal der Eingabeeinrichtung erzeugt wird, die eine gestufte Erhöhung der zu erreichenden Verzögerung des Fahrzeugs kodiert. Mit anderen Worten wird eine Erhöhung der bestehenden Fahrzeugverzögerung um einen vorbestimmten festen Wert angefordert. Entsprechend erzeugt eine kurze Betätigung des Schalters in die zweite Kippstellung eine gestufte Verringerung der zu erreichenden Verzögerung des Fahrzeugs. Die über die Bedieneinrichtung erzeugte Fahrzeug-Verzögerungsanforderung 3 stellt somit einen Offset zur bestehenden Fahrzeugverzögerung dar, der durch die Dauerbremse erzeugt werden soll. Dies bedeutet, dass jede Betätigung des Bedienhebels zur Erhöhung der Fahrzeugverzögerung zu einer aktiven Verzögerung des Fahrzeugs führen soll, unabhängig, in welchem Ist-Beschleunigungszustand sich das Fahrzeug momentan befindet. Die Bedieneinrichtung kann mit einer entsprechenden Beschriftung versehen werden, die dem Fahrer anzeigt, welche Erhöhung oder Verringerung der Fahrzeugverzögerung er durch Betätigung des Kippschalters anfordern kann, z. B. als Wert mit der Einheit m/s^2 oder als Prozentangabe der Erdbeschleunigung. Alternativ oder zusätzlich kann die Bedieneinrichtung ein Anzeigemittel aufweisen oder mit einem Anzeigemittel, z. B. einem Display, gekoppelt sein, das dem Fahrer anzeigt, welche Erhöhung oder Verringerung der Fahrzeugverzögerung er durch Betätigung des Kippschalters aktuell anfordert.

Die Bedieneinrichtung ist hierbei so ausgeführt, dass ein Halten des Kippschalters in der ersten oder zweiten Kippstellung eine entsprechende stufenlose Veränderung der auswählbaren Fahrzeug-Verzögerungsanforderung 3 auslöst. Über die Dauer des Haltens des Kippschalters kann der Wert der ausgewählten Fahrzeug-Verzögerungsanforderung 3 eingestellt werden, was durch eine optische Anzeige unterstützt werden kann. Es kann auch sofort auf eine Maximalanforderung per einmaliger Tastung umgeschaltet werden. Dementsprechend ist eine Ausschaltung per Null-Setting ebenfalls möglich.

Hat der Fahrer durch Betätigung der Bedieneinrichtung 2 eine Fahrzeug-Verzögerungsanforderung 3 ausgewählt, wird diese als Ausgabesignal von der Bedieneinrichtung ausgegeben und eingangsseitig von der Dauerbremsensteuereinrichtung 4 erfasst.

Die Dauerbremsensteuereinrichtung 4 ist so konfiguriert, dass sie in Abhängigkeit von der ausgewählten Fahrzeug-Verzögerungsanforderung eine Dauerbremsen-Bremsanforderung 5, die ein von der Dauerbremse aufzubringendes Dauerbremsen-Bremsmoment kodiert, bestimmt und an die Dauerbremse 6 übermittelt. Die Dauerbremsen-Bremsanforderung 5 wird dabei so festgelegt, dass sie beim Einstellen des Dauerbremsen-Bremsmoments durch die mindestens eine Dauerbremse 6 für gleiche Fahrzeug-Verzögerungsanforderungen stets die gleichen Verzögerungen des Fahrzeugs bewirkt. So wird z. B. auf der Grundlage eines ausgewählten Werts für die Fahrzeug-Verzögerungsanforderung 3 von der Dauerbremsensteuereinrichtung 4 die Dauerbremse 6 so angesteuert, dass die tatsächliche Veränderung der bestehenden Fahrzeugverzögerung dem ausgewählten Wert der Fahrzeug-Verzögerungsanforderung 3 entspricht - unabhängig davon, ob das Fahrzeug unbeladen oder beladen ist. Größere Fahrzeug-/Zuggesamtgewichte bedürfen daher höherer Dauerbremsmomente bei gleicher/fixer Verzögerungsanforderung. Entsprechend bedürfen geringere Fahrzeug-/Zuggesamtgewichte niedrigerer Bremsmomente bei gleicher/fixer Verzögerungsanforderung.

Hierzu führt die Dauerbremsensteuereinrichtung 4 eine Regelung des Dauerbremsbetriebs nach dem Prinzip der Verzögerungsregelung durch. Hierzu ist die Dauerbremsensteuereinrichtung 4 ausgebildet, eine Regelung des Dauerbremsbetriebs durchzuführen, bei der eine Abweichung einer fortlaufend bestimmten Ist-Fahrzeugverzögerung 7 des Fahrzeugs als Regelgröße mit der Soll-Fahrzeugverzögerung als Führungsgröße verglichen wird. Die absolute Soll-Fahrzeugverzögerung ergibt sich aus der ausgewählten Fahrzeug-Verzögerungsanforderung, die angibt, um welchen Wert die bestehende Fahrzeugverzögerung verändert werden soll, und der bestehenden Fahrzeugverzögerung.

Die Ist-Fahrzeugverzögerung 7 kann beispielsweise aus dem zeitlichen Verlauf der Fahrzeuggeschwindigkeit und/oder Radgeschwindigkeit ermittelt werden. Bei Regelabweichungen passt die Dauerbremsensteuereinrichtung 4 die Dauerbremsen-Bremsanforderung 5 als Stellgröße entsprechend an. Spiegelt sich eine Sollverzögerung des Fahrzeugs im Ist-Verhalten des Fahrzeugs wider, d. h. liegt keine Regelabweichung vor, werden Dauerbremsmomente nicht korrigiert; im anderen Fall sehr wohl.

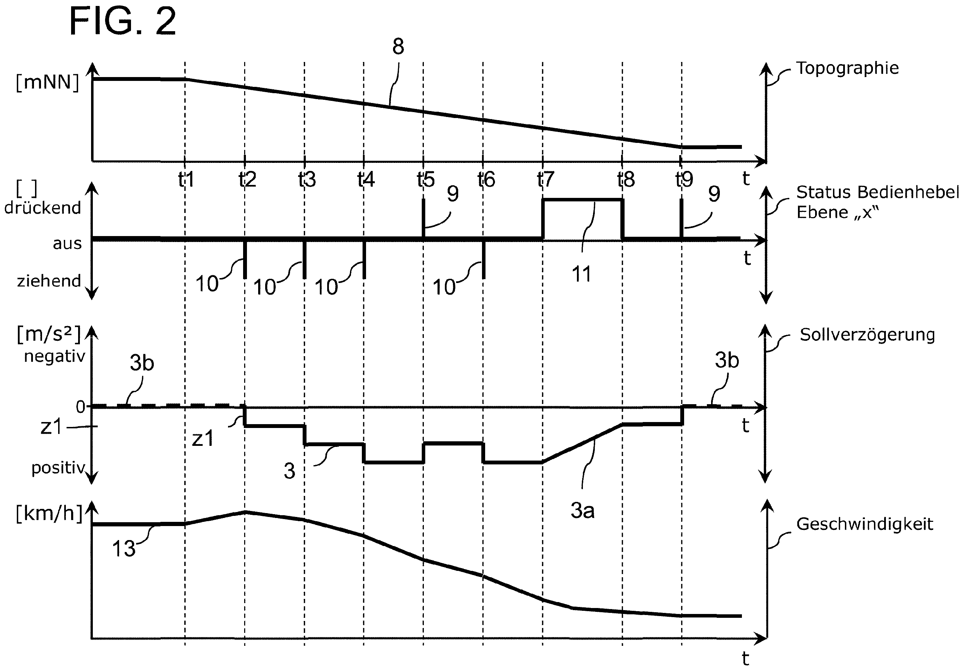

Figur 2 zeigt ein Zeitdiagramm zur Illustration einer Funktionsweise der Dauerbremsvorrichtung nach dem Prinzip der Verzögerungsregelung gemäß einer Ausführungsform der Erfindung. Im oberen Diagramm der Figur 2 ist ein topographischer Streckenverlauf 8 über die Zeit gezeigt. Vor dem Zeitpunkt t1 fährt das Fahrzeug auf einem horizontalen Streckenabschnitt ohne Gefälle. Zum Zeitpunkt t1 fährt das Fahrzeug in eine Gefällestrecke ein und verlässt die Gefällestrecke wieder im Zeitpunkt t9.

Das zweite Diagramm von oben der Figur 2 illustriert die Bedienung der Eingabeeinrichtung 2 durch den Fahrer während der Fahrt durch die Gefällestrecke. Das dritte Diagramm von oben der Figur 2 illustriert den entsprechenden zeitlichen Verlauf der Fahrzeug-Verzögerungsanforderung 3. Das untere Diagramm der Figur 2 illustriert den entsprechenden zeitlichen Verlauf der Fahrzeuggeschwindigkeit beim Durchfahren der Gefällestrecke im Roll- und Dauerbremsbetrieb.

Vor dem Zeitpunkt t2 wird von der Eingabeeinrichtung 2 keine Fahrzeug-Verzögerungsanforderung 3 erzeugt bzw. deren Wert liegt bei null. Die Dauerbremseinrichtung befindet sich bis zum Zeitpunkt t2 im AUS-Modus (OFF-Modus) 3b, d. h. die Dauerbremseinrichtung ist nicht aktiviert. Folglich bewegt sich das Fahrzeug bis zum Zeitpunkt t1 mit konstanter Fahrgeschwindigkeit (befeuerter Betrieb bzw. Fahrt mit Motormoment >0Nm). Im Zeitraum zwischen t1 und t2 nimmt die Fahrzeuggeschwindigkeit aufgrund der Einfahrt in die Gefällestrecke im Rollbetrieb zu.

Im Zeitpunkt t2 zieht der Fahrer kurz den Kippschalter der Bedieneinrichtung 2 in eine untere Stellung, dargestellt durch die mit dem Bezugszeichen 10 gekennzeichnete vertikale Linie im zweiten Diagramm von oben. Dadurch wird eine Sollverzögerung der Höhe z1 angefordert. Entsprechend regelt die Dauerbremsensteuereinrichtung 4 die Verzögerung des Fahrzeugs auf einen neuen Sollwert ein, der sich aus der bisherigen bestehenden Fahrzeugverzögerung abzüglich des Wertes z1 als Offset ergibt. Folglich nimmt die Geschwindigkeit des Fahrzeugs im Zeitabschnitt t2 bis t3 aufgrund des neuen Sollwerts der Fahrzeugverzögerung leicht ab.

Im Zeitpunkt t3 entscheidet sich der Fahrer, die Fahrzeuggeschwindigkeit mit der Dauerbremse noch schneller zu reduzieren, und zieht erneut kurz den Kippschalter der Bedieneinrichtung 2 in die untere Stellung, dargestellt durch die mit dem Bezugszeichen 10 gekennzeichnete zweite vertikale Linie im zweiten Diagramm von oben.

Dadurch wird erneut eine weitere Erhöhung der Soll-Verzögerung des Fahrzeugs angefordert. Entsprechend regelt die Dauerbremsensteuereinrichtung 4 die Verzögerung des Fahrzeugs auf einen neuen Sollwert ein.

Folglich nimmt die Geschwindigkeit des Fahrzeugs im Zeitabschnitt t3 bis t4 aufgrund des neuen Sollwerts noch schneller ab. Im Abschnitt t3..t4 wird die Fahrzeuggeschwindigkeit stärker reduziert als im Abschnitt t2..t3.

Im Zeitpunkt t4 entscheidet sich der Fahrer, die Fahrzeuggeschwindigkeit mit der Dauerbremse noch schneller zu reduzieren, und zieht erneut kurz den Kippschalter der Bedieneinrichtung 2 in die untere Stellung, dargestellt durch die mit dem Bezugszeichen 10 gekennzeichnete dritte vertikale Linie im zweiten Diagramm von oben.

Dadurch wird erneut eine weitere Erhöhung der Soll-Verzögerung angefordert. Entsprechend regelt die Dauerbremsensteuereinrichtung 4 die Verzögerung des Fahrzeugs wieder auf einen neuen Sollwert ein.

Folglich nimmt die Geschwindigkeit des Fahrzeugs im Zeitabschnitt t4 bis t5 aufgrund des neuen Sollwerts noch schneller ab. Im Abschnitt t4..t5 wird die Fahrzeuggeschwindigkeit stärker reduziert als im Abschnitt t3..t4.

Im Zeitpunkt t5 entscheidet sich der Fahrer, die Fahrzeuggeschwindigkeitsabnahme zu verringern, und drückt (anstatt zu ziehen) nun kurz den Kippschalter der Bedieneinrichtung 2 in eine obere Stellung, dargestellt durch die mit dem Bezugszeichen 9 gekennzeichnete vierte vertikale Linie im zweiten Diagramm von oben.

Dadurch wird eine Erhöhung der Soll-Verzögerung des Fahrzeugs um den zuvor gewählten Betrag rückgängig gemacht. Entsprechend regelt die Dauerbremsensteuereinrichtung 4 die Verzögerung des Fahrzeugs wieder auf einen neuen Sollwert ein.

Folglich nimmt die Geschwindigkeit des Fahrzeugs im Zeitabschnitt t5 bis t6 aufgrund des neuen Sollwerts wieder etwas langsamer ab. Die Verringerung der Fahrzeuggeschwindigkeit im Abschnitt t5..t6 ist betragsmäßig kleiner als die Verringerung im Abschnitt t4..t5 und entspricht wieder jener des Abschnitts t3..t4.

Im Zeitpunkt t6 entscheidet sich der Fahrer, die Fahrzeuggeschwindigkeit mit der Dauerbremse wieder schneller zu reduzieren, und zieht erneut kurz den Kippschalter der Bedieneinrichtung 2, dargestellt durch die mit dem Bezugszeichen 10 gekennzeichnete fünfte vertikale Linie im zweiten Diagramm von oben. Dadurch wird erneut eine Erhöhung der Soll-Verzögerung des Fahrzeugs angefordert. Entsprechend regelt die Dauerbremsensteuereinrichtung 4 die Verzögerung des Fahrzeugs wieder auf einen neuen Sollwert ein.

Im Zeitpunkt t7 drückt der Fahrer den Kippschalter der Bedieneinrichtung 2 und hält diesen während der Zeit t7 bis t8 in der oberen Stellung, dargestellt durch die mit dem Bezugszeichen 11 gekennzeichnete horizontale Linie im zweiten Diagramm von oben. Dadurch wird eine stufenlose Verringerung 3a der Soll-Verzögerung des Fahrzeugs als Fahrzeug-Verzögerungsanforderung angefordert. Im anschließenden Zeitintervall t8 bis t9 wird dann auf die zum Zeitpunkt t8 angeforderte Fahrzeug-Verzögerungsanforderung eingeregelt.

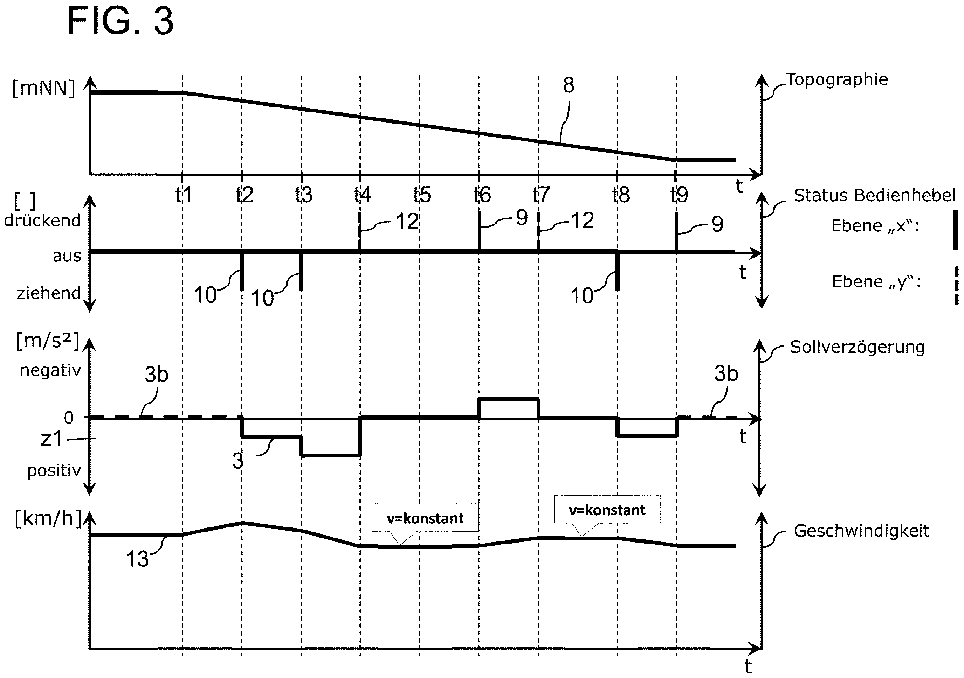

Im Zeitpunkt t9 schaltet der Fahrer die Dauerbremseinrichtung wieder in den AUS-Modus 3b, d. h. die Dauerbremseinrichtung wird wieder ausgeschaltet. Hierzu kann die Eingabeeinrichtung eine auswählbare AUS-Stellung, z. B. eine Nullstellung des Kippschalters, aufweisen. Figur 3 zeigt ein weiteres Zeitdiagramm zur Illustration einer Funktionsweise der Dauerbremsvorrichtung nach dem Prinzip der Verzögerungsregelung gemäß einer weiteren Ausführungsform der Erfindung. Zu den Zeitpunkten t2, t3 und t8 wird jeweils eine gestufte Erhöhung der Fahrzeugverzögerung angefordert, dargestellt durch die vertikalen Linien 10 und analog wie in Figur 2 beschrieben. Zu den Zeitpunkten t6 und t9 wird jeweils eine gestufte Verringerung der Fahrzeugverzögerung angefordert, dargestellt durch die vertikalen Linien 9 und ebenfalls analog wie in Figur 2 beschrieben.

Eine Besonderheit dieser Ausführungsvariante im Vergleich zu der in Figur 2 illustrierten liegt darin, dass die Bedieneinrichtung neben einer ersten Bedienebene der Bedieneinrichtung, über die eine gestufte oder stufenlose Fahrzeug-Verzögerungsanforderung auswählbar ist, wie in Figur 2 illustriert, noch eine zweite Bedienebene aufweist, über die eine Fahrzeug-Verzögerungsanforderung, die einer Fahrt mit konstanter Geschwindigkeit entspricht, auswählbar ist. Die zweite Bedienebene kann beispielsweise durch Bewegung des Kippschalter in eine Richtung "y", die senkrecht zur Zieh- oder Drückbewegung in einer Richtung "x" zur Einstellung der gestuften oder stufenlosen Fahrzeug-Verzögerungsanforderung ist. Die zweite Bedienebene kann beispielsweise auch durch Bereitstellung eines weiteren Bedienhebels, Schalters etc. realisiert sein. Die "zweite Bedienebene" kann auch parallel zur ersten Bedienebene liegen oder zu dieser nachgeordnet oder nachgeschaltet sein.

Bei Betätigung der zweiten Bedienebene wird eine Fahrzeug-Verzögerungsanforderung erzeugt, die eine v=-const-Regelung anfordert, d. h. eine Fahrt mit konstanter Geschwindigkeit. Entsprechend regelt die Dauerbremsensteuereinrichtung 4 die Dauerbremse 6 durch Bestimmung und Anpassung der Dauerbremsen-Bremsanforderung 5 so, dass das Fahrzeug die momentane Geschwindigkeit beibehält, auch wenn sich die Topographie auf einer Gefällstrecke während des Regelabschnitts ändert. Die Aktivierung der v-const-Regelung ist in Figur 3 durch die gestrichelten vertikalen Linien 12 dargestellt. Eine entsprechende Regelung wird zum Zeitpunkt t4 angefordert und zum Zeitpunkt t6 durch Betätigung der ersten Bedienebenen wieder deaktiviert. Eine entsprechende Regelung wird ferner zum Zeitpunkt t7 angefordert und zum Zeitpunkt t8 durch Betätigung der ersten Bedienebene wieder deaktiviert. Entsprechend zeigt der Geschwindigkeitsverlauf 13 im unteren Diagramm der Figur 3 in den Zeiträumen t4 bis t6 und t7 bis t8 einen konstanten Verlauf über die Zeit.

Eine derartige v-const-Regelung mittels der Dauerbremsvorrichtung ist jedoch nicht möglich, wenn sich das Fahrzeug in einer nachfolgenden Steigung oder in der Ebene befindet, in denen eine v=const-Regelung durch Bremsvorrichtungen nicht mehr realisierbar ist, da diese kein positives Moment erzeugen können.

Unabhängig davon, ob eine Betätigung der ersten Bedienebene dem Fahrerwunsch nach Fahren mit konstanter Geschwindigkeit (Betätigung der zweiten Bedienebene) voranging oder direkt auf eine v=const-Anforderung per Betätigung der zweiten Bedienebene umgeschaltet wurde, steuert die Dauerbremsensteuereinrichtung 4 die Dauerbremse in diesem Fall so an, dass das Fahrzeug sich in Gefällen mit konstanter Geschwindigkeit durch Aufrechterhaltung des Regelkreises mit Regelziel Sollbeschleunigung a_soll=0m/s² fortbewegt. Dieser Zustand wird durch Ausschalten, z. B. durch erneute Betätigung der zweiten Bedienebene oder durch Betätigung der ersten Bedienebene und damit einer Fahrzeug-Verzögerungsanforderung von größer null oder durch Einfahrt in eine Steigung/eine Ebene, aufgelöst.

Die Ausführung einer Sollverzögerung unterliegt jedoch ständig der Schlupfkontrolle durch das elektronische Bremssystem (EBS) und dem Antiblockiersystem (ABS), d. h., angeforderte Dauerbremsmomente, die für die Umsetzung einer Sollverzögerung erforderlich wären, werden in dem Moment limitiert, wenn Schlupfgrenzen in Gefahr geraten, verletzt zu werden. Die Sollverzögerung kann in diesem Fall nicht 1:1 in eine entsprechende Ist-Verzögerung umgewandelt werden. Der Verzögerungsanforderung bleibt jedoch bestehen und kann zur 100%-igen Umsetzung führen, sofern sich die Reibwertverhältnisse wieder verbessert haben Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Dauerbremsvorrichtung
- 2: Eingabeeinrichtung
- 3: Fahrzeug-Verzögerungsanforderung
- 3a: stufenlose Verringerung der Verzögerungsanforderung
- 3b: AUS-Modus
- 4: Dauerbremsensteuereinrichtung
- 5: Dauerbremsen-Bremsanforderung
- 6: Dauerbremse
- 7 (a_ist): Ist-Verzögerung des Fahrzeugs
- 8: Zeitlicher Verlauf der Streckentopographie
- 9: Betätigung der Eingabeeinrichtung zur gestuften Verringerung der Verzögerungsanforderung
- 10: Betätigung der Eingabeeinrichtung zur gestuften Erhöhung der Verzögerungsanforderung
- 11: Betätigung der Eingabeeinrichtung zur stufenlosen Verringerung der Verzögerungsanforderung
- 12: Anforderung einer v=const-Regelung
- 13: Zeitlicher Geschwindigkeitsverlauf

## Patentansprüche

1. Dauerbremsvorrichtung (1) für ein Fahrzeug, umfassend
- mindestens eine Dauerbremse (6);
- eine Eingabeeinrichtung (2), mittels derer eine Fahrzeug-Verzögerungsanforderung (3) auswählbar ist, die eine zu erreichende Verzögerung ausgehend von einer bestehenden Fahrzeugbewegung kodiert; und
- eine Dauerbremsensteuereinrichtung (4), die so ausgebildet ist, dass sie in Abhängigkeit von der ausgewählten Fahrzeug-Verzögerungsanforderung (3) eine Dauerbremsen-Bremsanforderung (5), die ein von der Dauerbremse (6) aufzubringendes Dauerbremsen-Bremsmoment kodiert, bestimmt, die beim Einstellen des Dauerbremsen-Bremsmoments durch die mindestens eine Dauerbremse (6) für gleiche Fahrzeug-Verzögerungsanforderungen (3) und insbesondere unabhängig von der aktuellen Fahrzeuggesamtmasse stets die gleichen Verzögerungen des Fahrzeugs bewirkt,
**dadurch gekennzeichnet,**
**dass** die Dauerbremsensteuereinrichtung (4) ausgebildet ist, eine Regelung des Dauerbremsbetriebs durchzuführen, bei der eine Abweichung einer fortlaufend bestimmten Ist-Fahrzeugverzögerung (7) als Regelgröße mit einer der ausgewählten Fahrzeug-Verzögerungsanforderung (3) entsprechenden Soll-Fahrzeugverzögerung als Führungsgröße verglichen wird und bei Regelabweichungen die Dauerbremsen-Bremsanforderung (5) als Stellgröße angepasst wird.

2. Dauerbremsvorrichtung (1) nach Anspruch 1, **dadurch gekennzeichnet, dass** für die auswählbaren Werte der Fahrzeug-Verzögerungsanforderungen (3) jeweils ein vorbestimmter Wert der Dauerbremsen-Bremsanforderung (5) hinterlegt ist, der von der Dauerbremsensteuereinrichtung (4) als Startwert für die Regelung des Dauerbremsbetriebs verwendet wird.

3. Dauerbremsvorrichtung (1) nach Anspruch 1, **dadurch gekennzeichnet, dass** ein in Abhängigkeit von der erfassten Fahrzeug-Verzögerungsanforderung (3) bestimmter Wert der Dauerbremsen-Bremsanforderung (5) ferner in Abhängigkeit von einer aktuellen Fahrzeuggesamtmasse, einer aktuellen Fahrbahnsteigung und/oder einer aktuellen Fahrbahnreibung angepasst wird und als Startwert für die Regelung des Dauerbremsbetriebs verwendet wird.

4. Dauerbremsvorrichtung (1) nach einem der vorhergehenden Ansprüche, **dadurch gekennzeichnet, dass** die Fahrzeug-Verzögerungsanforderung (3) mittels der Eingabeeinrichtung (2) in Stufen und/oder stufenlos auswählbar ist.

5. Dauerbremsvorrichtung (1) nach einem der vorhergehenden Ansprüche, **dadurch gekennzeichnet, dass** mittels der Eingabeeinrichtung (2) eine Erhöhung und eine Verringerung der Fahrzeugverzögerung ausgehend von der bestehenden Fahrzeugbewegung als zu erreichende Fahrzeug-Verzögerungsanforderung (3) auswählbar ist, z. B. als Wert mit der Einheit m/s^2 oder als Prozentangabe der Erdbeschleunigung.

6. Dauerbremsvorrichtung (1) nach einem der vorhergehenden Ansprüche, **dadurch gekennzeichnet, dass** mittels der Eingabeeinrichtung (2) eine Fahrzeug-Verzögerungsanforderung (3) auswählbar ist, die einer Fahrt mit konstanter Geschwindigkeit entspricht.

7. Dauerbremsvorrichtung nach Anspruch 6, **dadurch gekennzeichnet, dass** bei Auswahl einer Fahrzeug-Verzögerungsanforderung (3), die einer Fahrt mit konstanter Geschwindigkeit entspricht, die Dauerbremsen-Bremsanforderung (5) derart bestimmt wird, dass sich das Fahrzeug zumindest in einer Gefällestrecke unabhängig vom Gefällegrad mit konstanter Geschwindigkeit bewegt.

8. Dauerbremsvorrichtung (1) nach einem der vorhergehenden Ansprüche, **dadurch gekennzeichnet, dass** die Eingaberichtung (2) eine auswählbare Nullstellung aufweist, mittels derer eine zuvor über die Eingabeeinrichtung (2) ausgewählte Veränderung der Fahrzeug-Verzögerung rückgängig gemacht oder deaktiviert werden kann.

9. Dauerbremsvorrichtung (1) nach einem der vorhergehenden Ansprüche, **dadurch gekennzeichnet, dass** die Bedieneinrichtung (2)
a) eine erste Bedienebene aufweist, mittels derer unterschiedliche Fahrzeug-Verzögerungsanforderungen (3) größer oder kleiner null in Stufen und/oder stufenlos auswählbar sind; und
b) eine zweite Bedienebene aufweist, über die eine Fahrzeug-Verzögerungsanforderung (3), die einer Fahrt mit konstanter Geschwindigkeit entspricht, auswählbar ist.

10. Dauerbremsvorrichtung (1) nach einem der vorhergehenden Ansprüche, **dadurch gekennzeichnet, dass** die Bedieneinrichtung einen Kippschalter oder Tipphebel aufweist, der aus einer Mittelstellung wahlweise in eine erste Stellung und eine zweite Stellung verschwenkt werden kann und sich selbsttätig wieder in die Mittelstellung zurückstellt, wobei
a) eine kurze Betätigung des Kippschalters oder des Tipphebels in die erste Stellung eine gestufte Erhöhung der zu erreichenden Verzögerung des Fahrzeugs kodiert,
b) eine kurze Betätigung des Kippschalters oder des Tipphebels in die zweite Stellung eine gestufte Verringerung der zu erreichenden Verzögerung des Fahrzeugs kodiert; und
c) ein Halten des Kippschalters oder des Tipphebels in der ersten (oder zweiten) Stellung eine stufenlose Erhöhung (oder Verringerung) der zu erreichenden Verzögerung des Fahrzeugs kodiert.

11. Dauerbremsvorrichtung (1) nach einem der vorhergehenden Ansprüche, **dadurch gekennzeichnet, dass** die Bedieneinrichtung ein Bedienelement aufweist, das rastend wahlweise in eine erste Richtung und eine zweite Richtung verschoben werden kann und nicht automatisch oder zwangsweise in die Nullstellung zurückfällt, wobei
a) eine Verschiebung des Bedienelements in die erste Stellung eine gestufte Erhöhung der zu erreichenden Verzögerung des Fahrzeugs kodiert, und
b) eine Verschiebung des Bedienelements in die zweite Stellung eine gestufte Verringerung der zu erreichenden Verzögerung des Fahrzeugs kodiert.

12. Nutzfahrzeug, mit einer Dauerbremsvorrichtung (1) nach einem der vorhergehenden Ansprüche.

## Claims

1. A retarder device (1) for a vehicle, comprising
- at least one retarder (6);
- an input device (2) by means of which a vehicle deceleration demand (3) is selectable which encodes a deceleration that is to be achieved proceeding from an existing vehicle movement; and
- a retarder control device (4) which is configured so as to determine a retarder braking demand (5), which encodes a retarder braking moment that is to be imparted by the retarder (6), in a manner dependent on the selected vehicle deceleration demand (3), which retarder control device, in setting the retarder braking moment by means of the at least one retarder (6), always sets the same decelerations of the vehicle for the same vehicle deceleration demands (3), in particular independently of the present total vehicle mass, **characterized**
**in that** the retarder control device (4) is configured to perform closed-loop control of the retarder operation, in the case of which a deviation of a continuously determined actual vehicle acceleration (7), as control variable, is compared with a setpoint vehicle deceleration, corresponding to the selected vehicle deceleration demand (3), as reference variable, and, in the event of control deviations, the retarder braking demand (5) as manipulated variable is adapted.

2. The retarder device (1) according to Claim 1, **characterized in that**, for the selectable values of the vehicle deceleration demands (3), there is stored a respective predetermined value of the retarder braking demand (5), which value is used by the retarder control device (4) as a starting value for the closed-loop control of the retarder operation.

3. The retarder device (1) according to Claim 1, **characterized in that** a value, determined in a manner dependent on the detected vehicle deceleration demand (3), of the retarder braking demand (5) is furthermore adapted in a manner dependent on a present total vehicle mass, a present roadway gradient and/or a present roadway friction and used as a starting value for the closed-loop control of the retarder operation.

4. The retarder device (1) according to any one of the preceding claims, **characterized in that** the vehicle deceleration demand (3) is selectable in steps, and/or in continuously variable fashion, by means of the input device (2).

5. The retarder device (1) according to any one of the preceding claims, **characterized in that**, by means of the input device (2), an increase and a reduction of the vehicle deceleration proceeding from the existing vehicle movement is selectable as a vehicle deceleration demand (3) to be attained, for example as a value with the unit m/s^2 or as a percentage of gravitational acceleration.

6. The retarder device (1) according to any one of the preceding claims, **characterized in that**, by means of the input device (2), a vehicle deceleration demand (3) is selectable that corresponds to travel at constant speed.

7. The retarder device according to Claim 6, **characterized in that**, in the case of a vehicle deceleration demand (3) being selected which corresponds to travel at constant speed, the retarder braking demand (5) is determined such that, at least in a downhill route section, the vehicle moves at constant speed independently of the downhill gradient.

8. The retarder device (1) according to any one of the preceding claims, **characterized in that** the input device (2) has a selectable zero position by means of which a change in the vehicle deceleration previously selected by means of the input device (2) can be reversed or deactivated.

9. The retarder device (1) according to any one of the preceding claims, **characterized in that** the operator control device (2)
a) has a first operator control level, by means of which different vehicle deceleration demands (3) higher or lower than zero are selectable in steps and/or in continuously variable fashion; and
b) has a second operator control level, by means of which a vehicle deceleration demand (3) that corresponds to travel at constant speed is selectable.

10. The retarder device (1) according to any one of the preceding claims, **characterized in that** the operator control device has a tilt switch or tip lever which can be pivoted from a central position selectively into a first position and a second position and which automatically resets into the central position, wherein
a) a short actuation of the tilt switch or of the tip lever into the first position encodes a stepped increase of the deceleration of the vehicle that is to be attained,
b) a short actuation of the tilt switch or of the tip lever into the second position encodes a stepped reduction of the deceleration of the vehicle that is to be attained; and
c) holding of the tilt switch or of the tip lever in the first (or second) position encodes a continuously variable increase (or reduction) of the deceleration of the vehicle that is to be attained.

11. The retarder device (1) according to any one of the preceding claims, **characterized in that** the operator control device has an operator control element which can be displaced with latching action selectively in a first direction and a second direction and which does not automatically or forcibly return into the zero position, wherein
a) a displacement of the operator control element into the first position encodes a stepped increase of the deceleration of the vehicle that is to be attained, and
b) a displacement of the operator control element into the second position encodes a stepped reduction of the deceleration of the vehicle that is to be attained.

12. A utility vehicle having a retarder device (1) according to any one of the preceding claims.

## Revendications

1. Ralentisseur (1) pour un véhicule, comprenant
- au moins un frein continu (6) ;
- un dispositif d'entrée (2) permettant de sélectionner une demande de décélération de véhicule (3) qui code une décélération à atteindre en partant d'un mouvement de véhicule existant ; et
- un dispositif de commande de frein continu (4) qui est réalisé de telle sorte qu'il détermine en fonction de la demande de décélération de véhicule (3) sélectionnée une demande de freinage de frein continu (5) qui code un couple de freinage de frein continu à générer par le frein continu (6) et provoque toujours les mêmes décélérations du véhicule lors du réglage du couple de freinage de frein continu par ledit au moins un frein continu (6) pour les mêmes demandes de décélération de véhicule (3), et en particulier indépendamment de la masse totale de véhicule actuelle,
**caractérisé en ce que** le dispositif de commande de frein continu (4) est réalisé pour effectuer une régulation du fonctionnement de frein continu dans lequel un écart d'une décélération de véhicule réelle (7), déterminée en continu, en tant que grandeur de régulation est comparée avec une décélération de véhicule théorique, correspondant à la demande de décélération de véhicule (3) sélectionnée, en tant que grandeur de référence, et en cas d'écarts de régulation, la demande de freinage de frein continu (5) est adaptée en tant que grandeur de commande.

2. Ralentisseur (1) selon la revendication 1, **caractérisé en ce que** pour les valeurs pouvant être sélectionnées des demandes de décélération de véhicule (3), respectivement une valeur prédéterminée de la demande de freinage de frein continu (5) est enregistrée qui est utilisée par le dispositif de commande de frein continu (4) en tant que valeur de départ pour la régulation du fonctionnement de frein continu.

3. Ralentisseur (1) selon la revendication 1, **caractérisé en ce qu'**une valeur de la demande de freinage de frein continu (5), déterminée en fonction de la demande de décélération de véhicule (3) détectée, est en outre adaptée en fonction d'une masse totale de véhicule actuelle, d'une pente de chaussée actuelle et/ou d'une friction de chaussée actuelle et utilisée en tant que valeur de départ pour la régulation du fonctionnement de frein continu.

4. Ralentisseur (1) selon l'une quelconque des revendications précédentes, **caractérisé en ce que** la demande de décélération de véhicule (3) peut être sélectionnée progressivement et/ou en continu au moyen du dispositif d'entrée (2).

5. Ralentisseur (1) selon l'une quelconque des revendications précédentes, **caractérisé en ce que** le dispositif d'entrée (2) permet de sélectionner, en partant du mouvement de véhicule existant, une augmentation et une diminution de la décélération de véhicule en tant que demande de décélération de véhicule (3) à atteindre, par exemple comme une valeur de l'unité m/s^2 ou comme un pourcentage de l'accélération gravitationnelle.

6. Ralentisseur (1) selon l'une quelconque des revendications précédentes, **caractérisé en ce que** le dispositif d'entrée (2) permet de sélectionner une demande de décélération de véhicule (3) qui correspond à un déplacement à vitesse constante.

7. Ralentisseur selon la revendication 6, **caractérisé en ce que** lors de la sélection d'une demande de décélération de véhicule (3) qui correspond à un déplacement à vitesse constante, la demande de freinage de frein continu (5) est déterminée de telle sorte que le véhicule se déplace à vitesse constante au moins sur une voie en pente indépendamment du degré de pente.

8. Ralentisseur (1) selon l'une quelconque des revendications précédentes, **caractérisé en ce que** le dispositif d'entrée (2) présente une position zéro sélectionnable qui permet d'annuler ou de désactiver une modification de la décélération de véhicule, sélectionnée précédemment par le dispositif d'entrée (2) .

9. Ralentisseur (1) selon l'une quelconque des revendications précédentes, **caractérisé en ce que** le dispositif d'actionnement (2)
a) présente un premier niveau d'actionnement qui permet de sélectionner progressivement et/ou en continu différentes demandes de décélération de véhicule (3) supérieures ou inférieures à zéro ; et
b) présente un deuxième niveau d'actionnement qui permet de sélectionner une demande de décélération de véhicule (3) qui correspond à un déplacement à vitesse constante.

10. Ralentisseur (1) selon l'une quelconque des revendications précédentes, **caractérisé en ce que** le dispositif d'actionnement présente un interrupteur à bascule ou un levier à impulsion qui peut pivoter à partir d'une position centrale au choix dans une première position et une deuxième position et qui revient automatiquement à la position centrale, dans lequel
a) un maniement bref de l'interrupteur à bascule ou du levier à impulsion vers la première position code une augmentation progressive de la décélération du véhicule à atteindre,
b) un maniement bref de l'interrupteur à bascule ou du levier à impulsion vers la deuxième position code une diminution progressive de la décélération du véhicule à atteindre ; et
c) un maintien de l'interrupteur à bascule ou du levier à impulsion dans la première (ou deuxième) position code une augmentation (ou diminution) progressive de la décélération du véhicule à atteindre.

11. Ralentisseur (1) selon l'une quelconque des revendications précédentes, **caractérisé en ce que** le dispositif d'actionnement présente un élément d'actionnement qui peut être déplacé par enclenchement au choix dans une première direction et une deuxième direction et ne revient pas automatiquement ou forcément à la position zéro, dans lequel
a) un décalage de l'élément d'actionnement vers la première position code une augmentation progressive de la décélération du véhicule à atteindre, et
b) un décalage de l'élément d'actionnement vers la deuxième position code une diminution progressive de la décélération du véhicule à atteindre.

12. Véhicule utilitaire, comprenant un ralentisseur (1) selon l'une quelconque des revendications précédentes.
